(19)

**Europäisches Patentamt**

**European Patent Office**

**Office européen des brevets**

(11) **EP 3 473 379 B1**

(12) **EUROPEAN PATENT SPECIFICATION**

(45) Date of publication and mention
of the grant of the patent:
**13.01.2021 Bulletin 2021/02**

(51) Int Cl.:
**B24B 27/00** (2006.01)

(21) Application number: **17197459.5**

(22) Date of filing: **20.10.2017**

(54) **GRINDING CENTER AND METHOD FOR AXIS COMPENSATION OF A GRINDING CENTER**

SCHLEIFZENTRUM UND VERFAHREN ZUR ACHSKOMPENSATION EINES SCHLEIFZENTRUMS

STATION DE MEULAGE ET PROCÉDÉ DE COMPENSATION D'AXE D'UNE STATION DE MEULAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.04.2019 Bulletin 2019/17**

(73) Proprietor: **Lapmaster Wolters GmbH**
**24768 Rendsburg (DE)**

(72) Inventor: **Wildegger, Benjamin**
**82362 Weilheim (DE)**

(74) Representative: **Lohr, Jöstingmeier & Partner**
**Junkersstraße 3**
**82178 Puchheim/München (DE)**

(56) References cited:
**EP-A1- 2 290 486          EP-A2- 0 545 658
DE-A1- 10 343 613          FR-A1- 2 928 289
US-A1- 2013 253 871**

• **DASSANAYAKE K M M ET AL: "A strategy for
identifying static deviations in universal spindle
head type multi-axis machining centers",
INTERNATIONAL JOURNAL OF MACHINE
TOOLS AND MANUFACTURE, ELSEVIER,
AMSTERDAM, NL, vol. 46, no. 10, 1 August 2006
(2006-08-01), pages 1097-1106, XP024902514,
ISSN: 0890-6955, DOI:
10.1016/J.IJMACHTOOLS.2005.08.010 [retrieved
on 2006-08-01]**
• **Ibaraki,Iritani,Matsushita: "Calibration of
location errors of rotary axes on five-axis
machine tools by on-the-machine measurement
using a touch-trigger probe", International
Journal of Machine Tools & Manufacture, 21
March 2012 (2012-03-21), XP002782916,
Retrieved from the Internet:
URL:https://www.sciencedirect.com/science/
article/pii/S0890695512000429 [retrieved on
2018-07-10]**

EP 3 473 379 B1

## Description

### Field of the invention

The invention relates to a machining center having test pieces for an axis compensation of the machining center. The invention further relates to a method for carrying out an axis compensation of a machining center.

### Description of the related art

There are various embodiments of machining centers known from prior art. Machining centers are widely used for automatically machining workpieces like slugs or semi-finished products. Due to the required high machining precision machining of very small drilling bits, milling bits and the like is a particularly challenging task for any machining center. Generally, machining centers are configured to provide a relative movement between the workpiece to be machined and a machining tool. For example, grinding a workpiece requires a rotating grinding disc to be moved relative to the workpiece.

A machining center, for instance a grinding center usually comprises a rack, a machining table for supporting the workpiece, a spindle for clamping the machining tool and a plurality of slides each being translationally displaceable along a translational axis and/or heads each being rotational about a rotational axis. The machining table, the spindle, the slides and the heads are directly or indirectly supported by the rack which, hence, absorbs static and dynamic forces and dampens both vibrations and temperature variations during machining operations.

The relative movement between the workpiece and the machining tool is generated by individual movements of the components of the machining center relative to each other, namely relative movements of the rack, the machining table, the slides, the heads and the spindle. The components of a machining center define a so called kinematic chain between the workpiece and the machining tool which is characteristic for a specific machining center.

The complete set of relative orientations and/or positions of the translational and rotational axes of a kinematic chain of a machining center is usually referred to as the geometry of the machining center. The geometry of a machining center determines the degrees of freedom of the relative movement between the workpiece and the machining tool and, thus, determines the class of workpieces which can be machined by the machining center.

The translational and rotational axes are defined by corresponding linear and radial/axial bearings, respectively, which are integral with or attached to the slides, the heads and/or the rack of the machining center. In order to move the machining table, the slides and the heads relative to each other, a machining center usually has a plurality of drives each being associated with an axis. Moreover, the machining center may have a plurality of sensors to detect the actual positions of the components, i.e. the machining table, the slides and the heads of the machining center relative to the corresponding axes.

A position of a component of the machining center relative to the corresponding axis may be indicated by a positive or negative linear or angular distance from a defined zero point of the corresponding axis, where a positive distance indicates a distance in a positive direction and a negative distance indicates a distance in the negative direction which is opposite to the positive direction. In particular, a positive angular direction is defined in the usual way according to the well-known right-hand rule when applied to the respective rotational axis.

The machining center additionally may have a programmable control unit being configured for processing, transferring and storing digital information. In most cases the control unit provides a logical representation of the machining center, i.e. a model of the geometry of the machining center in order to allow for easily programming any necessary movement of a component.

The control unit is logically connected to the drives and sensors of the machining center. Thus, the control unit is able to control the movements of the components of the machining center by detecting the actual positions of the components and operating the drives for adequately changing these positions.

The control unit may be CNC (Computerized Numerical Control) capable, i.e. may be programmed by so called CNC programs and be able to execute the CNC programs. A CNC program usually allows for coding and, hence, for accurately determining a sequence of movements of the components of the machining center with their respective spatial extension, speed and/or duration in order to provide a required over all movement of the kinematic chain.

Machining centers already have and in future will have to meet ever higher requirements concerning manufacturing precision, availability and economic efficiency in order to guarantee a constantly high rate of workpieces having a high quality. The quality of a workpiece, however, is limited by the precision of the relative movement between the workpiece and the machining tool provided by the machining center. In other words, any geometric deviation of a real machining center from its ideal geometry unavoidably results in corresponding imperfections of the machined workpiece.

Such a geometric deviation of a machining center may be caused by any geometric component variation within allowed manufacturing tolerances thereof and/or by geometric assembly variations allowed by the play of each component connection. Additionally, static and dynamic loads may on the long run result in a further geometric deviation of a machining center from the ideal geometry. With this respect to such geometric deviations any indication, above and below, concerning a relative orientation or position of two axes of a machining center has to be understood in a nominal sense only, i.e. a parallelism of two axes may include small deviations from parallelism and an orthogonality of two axes may include small deviations from orthogonality. In other word parallelism and orthogonality describe the ideal case while the real case may slightly deviate from the ideal case.

Generally, the overall geometric deviation of a multi-axis machining center comprises so called component deviations, axis deviations and multi-axis movement deviations. There are 6 component deviations per axis, 5 axis deviations per rotational axis, 3 axis deviations per translational axis and 3 multi-axis movement deviations. The total number of geometric deviations N of a multi-axis machining center can be calculated by

$$N = 6 \left( N_{rot} + N_{trans} \right) + 5 \, N_{rot} + 3 \, N_{trans} + 3,$$

where $N_{rot}$ is the number of rotational axes and $N_{trans}$ is the number of translational axes of the multi-axis machining center.

In order to reduce or exclude a negative impact of the geometric deviations onto the quality of the workpiece the geometric deviations of a machining center may be compensated. Any compensation of geometric deviations of a machining center is commonly referred to as axis compensation.

DE 103 43 613 A1 discloses a machining center according to the preamble of claim 1 and a method for carrying out an axis compensation according to the preamble of claim 9. Another method for carrying out an axis compensation is described by K.M. Muditha Dassanayake et al. in "A strategy for identifying static deviations in universal spindle head type multi-axis machining centers", International Journal of machine tools and manufacture, Elsevier, Amsterdam, NL, vol. 46, no. 10, 1 August 2006, pages 1097-1106, XP024902514, ISSN 08906955.

With respect to the high number of geometric deviations a complete axis compensation would take an enormous amount of time and, hence, be very expensive. In practice, the number of geometric deviations to be compensated has to be drastically reduced by neglecting those deviations which have little impact onto the overall geometric deviation. In other words, only the geometric deviations being most relevant for the overall geometric deviation should be compensated for sake of efficiency.

In the following, hence, only selected orientation deviations and position deviations of certain axes of a machining center are considered. The reasons and assumptions for other geometric deviations to be negligible or to be ignored are known to skilled persons or can be readily learnt from the respective technical literature. Setting forth this issue here would go beyond the scope of the disclosure. Apart from that, the present invention is not affected thereby.

There are two alternative ways for correcting geometric deviations of a machining center which eventually may also be applicable in combination, the mechanical axis compensation carried out by adjusting the machining center physically and the logical axis compensation carried out by adjusting the theoretical model of the machining center represented in the control unit thereof.

For a mechanical axis compensation the machining center may comprise one or more mechanical adjusting means each associated with an axis of the machining center. The mechanical adjusting means may be screws to be engaged in defined positions in order to mechanically adjust the position and/or orientation of a slide, a head or a bearing relative to the associated axis very accurately, i.e. in steps of few m° per engagement position.

For a logical axis compensation the geometric model of the machining center represented in the control unit may define one or more compensating parameters each associated with a geometric deviation of an axis of the machining center. The compensating parameters may be set to defined values in order to logically adjust the orientations and/or positions of the model axes to the corresponding physical axes. In other words, the perfect theoretical model of the machining center is adapted to the imperfect real geometry of the machining center.

The settings of the adjustment means, for instance the optimal engagement position of an adjusting screw and/or the values of the compensating parameters to best compensate the geometric deviations of the machining center are usually determined by means of a plurality of testing methods which have to be carried out in a defined sequence and at least partly can only be carried out manually. These methods accordingly require a plurality of different test pieces and suitable probes to be carried out. The different test pieces and probes correspond to different methods and/or method steps, respectively, and must be manually mounted on the machining center one after the other to perform all the steps of the testing methods. Some test pieces may have special sensors to detect geometric deviations.

A very well-known and reliable testing method of this type is the standardized so called ballbar testing. The ballbar testing requires a special test piece which has an elongate distance sensor and two bars which are connected to opposite free ends of the distance sensor by means of ball joints. The bars are secured to the machining table and the spindle of the machining center extending collinear with and parallel to the first rotational axis, respectively.

During the testing a circular relative movement of the two bars one about the other with a defined nominally constant radius is provided by the kinematic chain of the machining center both in a clockwise and in a counter-clockwise direction. Any deviation from the defined nominally constant radius is detected by the distance sensor of the test piece. The detected deviations are used to calculate corresponding adjustment parameters. Obviously, the ballbar testing method is hard to carry out automatically.

After finishing the testing methods the detected geometric deviations are used to accordingly adjust the adjusting screws and manually set the corresponding compensating parameters in the control unit. After all, carrying out these methods usually takes a long time. As an axis compensation has to be repeated rather often due to continuous static and variable dynamic loads onto the kinematic chain these methods, thus, immediately affect the efficiency of a machining center. Apart from that, by carrying out these methods a required accuracy of axis compensation may not yet be reached resulting in an insufficient quality of the machined workpieces.

Five-axis machining centers define a kinematic chain having five axes each being either translational or rotational. For example, a five-axis machining center may comprise a rack, a first and a second slide being supported by the rack and translationally displaceable along a first translational axis and a second translational axis, respectively, a machining table being supported by the first slide and rotatable about a first rotational axis, a third slide being supported by the second slide and translationally displaceable about a third translational axis, a head being supported by the third slide and rotatable about a second rotational axis and a spindle supported by the head. The spindle may define an additional rotational axis which is conventionally not counted for categorization of machining centers as a rotation of the machining tool is common to any machining center. Accordingly, a five-axis machining center having 3 translational axes and 3 rotational axes (including the rotational spindle axis), has 63 geometric deviations. The present invention relates to compensating 13 geometric deviations thereof.

**Summary of the invention**

The problem to be solved by the invention is to provide a machining center having alternative test pieces for improving the precision of and reducing the time required for an axis compensation of the machining center. A further problem to be solved by the invention is to propose a method for an axis compensation of a machining center which improves the precision of and reduces the time required for the axis compensation.

Solutions of the problem are described in the independent claims. The dependent claims relate to further improvements of the respective invention.

A machining center according to an embodiment of the invention, particularly a five-axis grinding center may comprise a control unit for automatically operating the machining center. Furthermore, the machining center may comprise a machining table for supporting a workpiece and a grinding head. The grinding head preferably has a spindle for clamping a machining tool and a first touch probe being attached to the grinding head and electrically connected to the control unit to provide a first touch probe signal to the control unit.

The electric connection between the first touch probe and the control unit may be provided by an interface unit, both the first touch probe and the control unit are electrically connected to. The interface unit is configured for receiving sample signals from the first touch probe corresponding to the tilting angle of the probe tip thereof, calculating output signals according to the requirements of the control unit therefrom and transmitting the calculated output signals to the control unit.

The machining center further comprises a first test piece which is configured to be mounted on the machining table. According to the invention the first test piece may have a second touch probe being electrically connectable to the control unit to provide a second touch probe signal to the control unit. The second touch probe, thus, is attached to the machining table when the first test piece is mounted on the machining table.

The machining center comprises a second test piece being configured to be connectable to the spindle. Providing two test pieces one of which is mountable on the machine table while the other one is connectable to the spindle and two touch probes one of which is secured to the machining table in the mounted state of the first test piece while the other one is attached to the grinding head allows for avoiding the elaborate ballbar testing.

The machining center may define a first rotational axis and a second rotational axis extending perpendicular to the first rotational axis. The machining table may be rotatable about the first rotational axis. The grinding head may be rotatable about the second rotational axis. The spindle defines a rotational spindle axis, the machining tool extending perpendicular to the second rotational axis.

The first touch probe preferably has a probe tip extending parallel to the second rotational axis. The second touch probe has a probe tip extending parallel to the first rotational axis in the mounted state of the first test piece. In other words, each probe tip extends in a direction parallel to the rotation axis of the component the corresponding touch probe is attached to.

The probe tip of the first touch probe and/or the probe tip of the second touch probe may be configured as a tilting head and may comprise an elongate pin and a ball wherein the ball is attached to one free end of the pin and the other free end of the pin is configured to be securely fixed in a mounting of the corresponding touch probe. The ball protects the object to be sampled by the probe tip while the elongate pin generates a torque sufficient to operate a tilting sensor of the touch probe when the probe tip is tilted by an object to be sampled.

The elongate pin preferably comprises a ceramic material and/or the ball is preferably configured as a ruby sphere, e.g. with a diameter in the range from 4 mm to 8 mm, preferably in the range from 5 mm to 7 mm and most preferred of 6 mm. Ceramic materials have both a high bending strength and a high thermal stability. Ruby spheres are very hard and, hence, do not suffer from attrition. Diameters within the indicated regions can reliably eliminate a surface roughness Ra = 0.4 $\mu$m of the faces of the test mandrels as deviations of an evenness of a surface are averaged by the so called Hertzian stress.

The first test piece preferably comprises a first base plate, particularly having first and second rectangular main faces, the first base plate having fastening means for mounting the base plate on the machining table. The first test piece may further comprise a first test mandrel being attached to the first base plate. Preferably, the first test mandrel and the second touch probe protrude perpendicular from the second main face of the first base plate and particularly are disposed equally spaced-apart from and opposite with respect to the first rotational axis in the mounted state of the first test piece. Of course, the machining table according to the invention may also be represented in the form of a dividing head. The first base plate, the first test mandrel and the second touch probe provide a very simple structure of the first test piece which allows for an easy and low-cost manufacture of the first test piece. Due to the eccentrical arrangement of the first test mandrel form and orientation imperfections of the first test mandrel can be averaged by rotating the first piece about the first rotational axis by 180°.

The second test piece may comprise a second base plate, particularly having rectangular main faces and a collet chuck for connecting the second test piece to the spindle. The collet chuck is preferably attached to a first main face of the second base plate. The second test piece may further comprise a second test mandrel being attached to the second base plate and protruding perpendicular from the second main face of the second base plate, particularly being disposed eccentrical with respect to the rotational spindle axis in the mounted state of the second test piece. A collet chuck corresponding to the spindle allows for quickly and easily connecting the second test piece to the spindle. Again, due to the eccentrical arrangement of the second test mandrel form and orientation imperfections of the second test mandrel can be averaged by rotating the second piece about the second rotational axis by 180°.

The second test mandrel and/or the first test mandrel may comprise a case-hardened steel and may be configured as an elongate bar with a rectangular, particularly quadratic cross-section defining a side touch face and a front touch face, preferably configured identical. The first and second test mandrels preferably have a side touch face and/or a front touch face comprising the case-hardened steel. Case-hardened steel can reduce or avoid an attrition of the touch faces of the first and second test mandrels.

Preferably, the first test piece is mounted on the machining table and/or the second test piece is connected to the spindle and/or the second touch probe is electrically connected to the control unit. In this state the five-axis machining center is prepared for an automatic axis compensation according to the invention.

The electric connection between the second touch probe and the control unit may be provided by an interface unit both the second touch probe and the control unit are electrically connected to. The interface unit is configured for receiving sample signals from the second touch probe the sample signals corresponding to the tilting angle of the probe tip, calculating output signals according to the requirements of the control unit, wherein the calculated output signals bijectively represent the received input signals, and transmitting the calculated output signals to the control unit.

According to another aspect of the invention a method is provided for carrying out an axis compensation of a machining center. The method may be particularly applied to a machining center according to the invention, the control unit of which defines a plurality of compensating parameters corresponding to geometric deviations of rotational axes and translational axes of the machining center, and which may have a machining table for supporting a workpiece and a grinding head. The grinding head preferably supports a spindle for clamping a machining tool and may have a first touch probe being attached to the grinding head. A first test piece having a first test mandrel configured to be sampled by the first touch probe may be mounted on the machining table.

According to the invention, a second test piece having a second test mandrel may be connected to the spindle. The second test mandrel preferably is configured to be sampled by a second touch probe being comprised by and attached to the first test piece. As a result, both the machining table and the grinding head may have both a test mandrel and a touch probe attached thereto in order to have the test mandrel of the machining table be sampled by the touch probe of the grinding head and have the test mandrel of the grinding head be sampled by the touch probe of the machining table. Due to the reciprocity of the respective test mandrels and touch probes an elaborate ball bar testing can be avoided which after all is hard to automate.

The method is preferably applied to a five-axis machining center having a CNC programmable control unit, defining a first translational axis, a second translational axis, a third translational axis, a first rotational axis, a second rotational axis and a rotational spindle axis, wherein each translational axis extends transverse, particularly perpendicular to each other translational axis, the first rotational axis and the second rotational axis extend parallel to the first translational axis and the third translational axis, respectively, and the rotational spindle axis extends perpendicular to the second rotational axis, and having mechanical adjusting means associated with the second rotational axis and the rotational spindle axis, respectively. Five-axis machining centers of this type are approved and widely used.

The method may comprise the steps:

- Preparing the machining center;
- Compensating a plurality of orientation deviations, particularly exactly nine orientation deviations of the rotational axes and the translational axes;

- Compensating a plurality of position deviations, particularly exactly four position deviations of the rotational spindle axis and the translational axes, respectively.

These method steps are at a very high abstraction level and will be described in more detail in the following. At any detail level the steps have to be carried out in the sequence according to the literal sequence, respectively.

Preparing the machining center may comprise the steps:

- Transferring compensation programs to the control unit;
- Setting the compensating parameters to zero;
- Mounting the first test piece on the machining table and electrically connecting the second touch probe to the control unit;
- Determining an orientation deviation and/or position deviation of the first test piece by a first measurement series;
- Connecting the second test piece to the spindle;
- Determining an orientation deviation and/or position deviation of the second test piece by a second measurement series.

For the sake of automation each step of compensation may be coded in a CNC program defining the movement of the kinematic chain required for the respective step of compensation. Preferably, each single step of compensation is coded in a separate program. Before starting the axis compensation any compensating parameter is preferably reset, i.e. set to zero in order to not distort the axis compensation to carry out. After correctly installing the first test piece and the second test piece both test pieces have to be adequately sampled in order to ensure a specified precision of the test pieces. The precision of the test pieces is crucial for the precision of the axis compensation.

Compensating a plurality of orientation deviations of the rotational axes and the translational axes may comprise the steps:

- Compensating a deviation from orthogonality of the orientation of the first rotational axis relative to the second translational axis and the third translational axis;
- Compensating a deviation from parallelism of the second rotational axis and the third translational axis;
- Compensating orientation deviations of the rotational spindle axis;
- Compensating a deviation from orthogonality of the second translational axis and the third translational axis;
- Compensation a deviation from orthogonality of the first translational axis and the second translational axis;

- Compensating a deviation from orthogonality of the first translational axis and the third translational axis, wherein the orientation deviations except the orientation deviations of the rotational spindle axis are compensated logically by the control unit, the control unit calculating and setting the corresponding compensating parameters.

Each of the compensation steps is carried out in form of a measurement series. Each measurement series comprises a plurality of measuring points which correspond to defined states of the kinematic chain which are provided by the control unit by means of adequate movements of the components. Each measuring point corresponds to a sampling contact of a probe tip of a touch probe with a touch face of the reciprocal test mandrel. The measured tilting angle detected by the touch probe is transformed by the interface unit and transmitted to the control unit. From the transformed tilting angle the control unit calculates and sets the corresponding compensating parameter which is referred to as a logical compensation.

Compensating the orientation deviations of the rotational spindle axis may comprise the steps:

- Compensating a deviation from orthogonality of the rotational spindle axis and the second rotational axis;
- Compensating a deviation from orthogonality of the rotational spindle axis and the third translational axis;
- Compensating a deviation from parallelism of the rotational spindle axis and the first rotational axis, wherein the orientation deviations related to orthogonality may be compensated mechanically by adjusting the corresponding adjusting means and the orientation deviation related to parallelism may be compensated logically by the control unit, the control unit calculating and setting the corresponding compensating parameters.

As the mechanical adjustment being carried out when compensating the deviation from orthogonality of the rotational spindle axis and the second rotational axis changes the orientation of the already compensated second rotational axis, the previous compensation step has to be repeated.

Compensating a plurality of position deviations of the rotational spindle axis and the translational axes, respectively, may comprise the steps:

- Compensating an offset deviation between the rotational spindle axis and the second rotational axis;
- Compensating the zero point deviations of the translational axes, wherein the offset deviation is compensated logically by the control unit, the control unit calculating and setting the corresponding compensating parameters.

Compensating the zero point deviations of the translational axes may comprise the steps:

- Compensating deviations of the zero points of the third translational axis and the second translational axis, respectively;
- Compensating a deviation of the zero point of the first translational axis,
  wherein the zero point deviations may be compensated logically by the control unit, the control unit calculating and setting the corresponding compensating parameters. Alternatively, the compensation parameters corresponding to the zero point deviations may be manually calculated from the detected tilting angle and entered into the control unit.

Preferably a measurement series is carried out automatically by means of a corresponding CNC program. CNC is a well-established and widely used way of coding movements of a kinematic chain of a machining center.

**Description of Drawings**

In the following the invention will be described by way of example, without limitation of the general concept of the invention, on examples of embodiment with reference to the drawings.

Figure 1    shows a perspective view of a five-axis machining center according to an embodiment of the invention;

Figure 2    shows a perspective view of a grinding head of the five-axis machining center shown in figure 1;

Figure 3    shows a control unit of the five-axis machining center shown in figure 1 and a second touch probe connected to the control unit via an interface unit;

Figure 4    shows a schematic perspective view of the axes of the five-axis machining center shown in figure 1;

Figure 5    shows a perspective view of a first test piece according to an embodiment of the invention;

Figure 6    shows a perspective view of a second test piece according to an embodiment of the invention;

Figure 7    shows a perspective view of orientation deviations of the five-axis machining center shown in figure 1 to be compensated;

Figure 8    shows a perspective view of position deviations of the five-axis machining center shown in figure 1 to be compensated; and

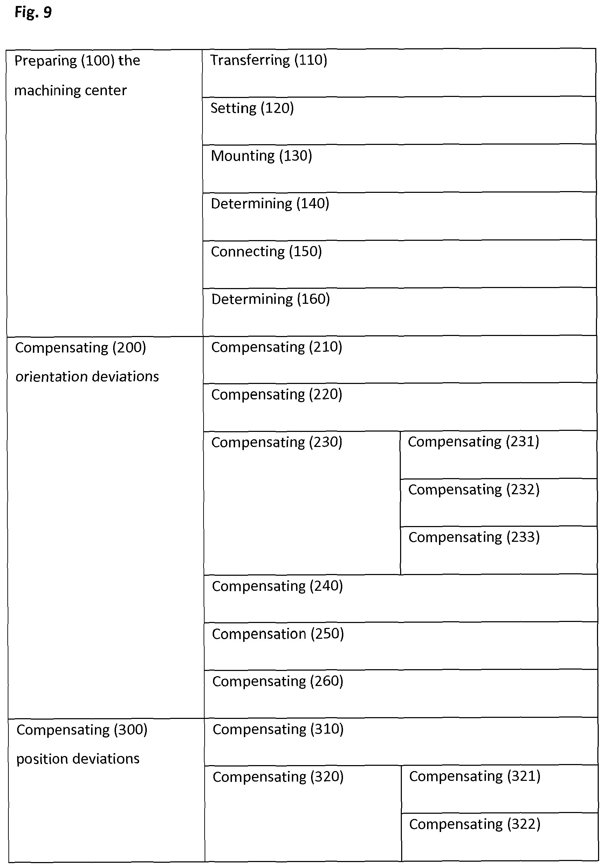

Figure 9    shows a flow diagram of the axis compensation method.

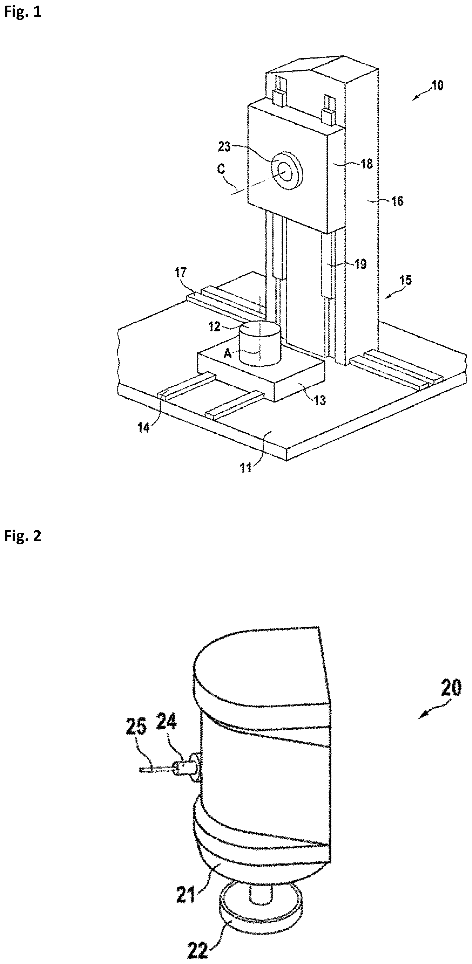

In figures 1 to 4 a preferred embodiment of a machining center 10 according to the invention is shown. The machining center 10 is a five-axis machining center having a rack 11 being part of and supporting further components of the kinematic chain of the machining center 10. However, the invention may be mutatis mutandis applied to any other multi-axis machining center.

In the following, the machining center 10 is described referring to a left-handed Cartesian coordinate system which is space-fixed relative to the rack 11 of the machining center 10. This choice, however, does not apply any restriction to the present invention. Different coordinate systems like a right-handed Cartesian coordinate system, a cylindrical or a spherical coordinate system may be used as well. Essentially, an appropriate coordinate system must only provide three linearly independent directions uniquely determining any position within the three-dimensional space.

The Cartesian coordinate system is orientated such that the y axis and the z axis of the coordinate system define a horizontal yz plane while the x axis defines a vertical direction extending perpendicular to the yz plane. Again, this special orientation does not at all restrict the present invention, and different orientations of the Cartesian coordinate system may be used as well.

Referring to this coordinate the machining center 10 defines a first rotational axis A extending parallel with the x axis and a second rotational axis C extending parallel with the z axis. Further, the machining center 10 defines three translational axes X, Y, Z extending parallel with the x, y, z axes of the coordinate system, respectively. In other words, each translational axis X, Y, Z extends perpendicular to each other translational axis X, Y, Z, the first rotational axis A and the second rotational axis C extend parallel to the first translational axis X and the third translational axis Z, respectively. Thus, there are five axes altogether. That is why the machining center 10 is referred to as a five-axis machining center.

The machining center 10 comprises a machining table 12 for supporting and fixing a workpiece (not shown) to be machined. The machining table 12 is rotatably supported by a radial/axial bearing defining the rotational axis A of the machining center 10. The radial/axial bearing supporting the machining table 12 is hidden in the figures. The machining center 10 further comprises a Z-slide 13. The Z-slide 13 is supported by and displaceable connected to a linear bearing 14 which defines the translational axis Z and is attached to the rack 11. The Z-slide 13 supports the radial/axial bearing supporting the machining table 12.

The machining center 10 comprises a Y-slide 15. The Y-slide 15 has a frame 16 extending mainly parallel with the x axis, i.e. in a vertical direction and is supported by and displaceable connected to a linear bearing 17 which defines the translational axis Y and is attached to the rack 11. The machining center 10 further comprises an X-slide 18. The X-slide 18 is supported by and displaceable connected to a linear bearing 19 defining the translational axis X and being attached to the frame 16 of the Y-slide 15.

Additionally, the machining center 10 comprises a grinding head 20. The grinding head 20 is rotatably supported by a radial/axial bearing 23. The radial/axial bearing 23 defines the second rotational axis C and is attached to the X slide 18. The grinding head 20 has a spindle 21 clamping a machining tool 22 in the form of a grinding disc. The spindle 21 defines a third rotational axis S, the so called rotational spindle axis S, which extends perpendicular to the rotational axis C.

Furthermore, the grinding head 20 comprises a first touch probe 24 being attached to the grinding head 20. The first touch probe 24 has a probe tip extending 25 parallel to the second rotational axis C and being configured as a tilting head. The first touch probe 24 is electrically connected to the control unit 26 via an interface unit 27 to provide a first touch probe signal to the control unit 26.

The machining center 10 has three linear drives (not shown) being associated with the translational axes X, Y, Z and translationally driving the corresponding X-, Y-, Z-slides along the linear bearings 14, 17, 19, respectively, on the one hand and two rotational drives (not shown) being associated with the rotational axes A, C and rotationally driving the machining table 12 and the grinding head 21 in the radial/axial bearings 23, respectively, on the other hand. One more drive is provided for driving the spindle 21 and the machining tool 22 clamped thereby about the rotational spindle axis S.

The machining center 10 comprises a plurality of sensors (not shown). The sensors are associated to the translational/rotational axes X, Y, Z, A, C of the machining center 10 and configured to detect the linear/angular position of the machining table 12, the Z slide 13, the Y-slide 15, the X-slide 18 and the grinding head 20 along/about the corresponding linear bearing 14, 17, 19 or radial/axial bearing 23, respectively. The machining center 10 additionally has mechanical adjusting means (not shown) associated with the second rotational axis C and the rotational spindle axis S, respectively.

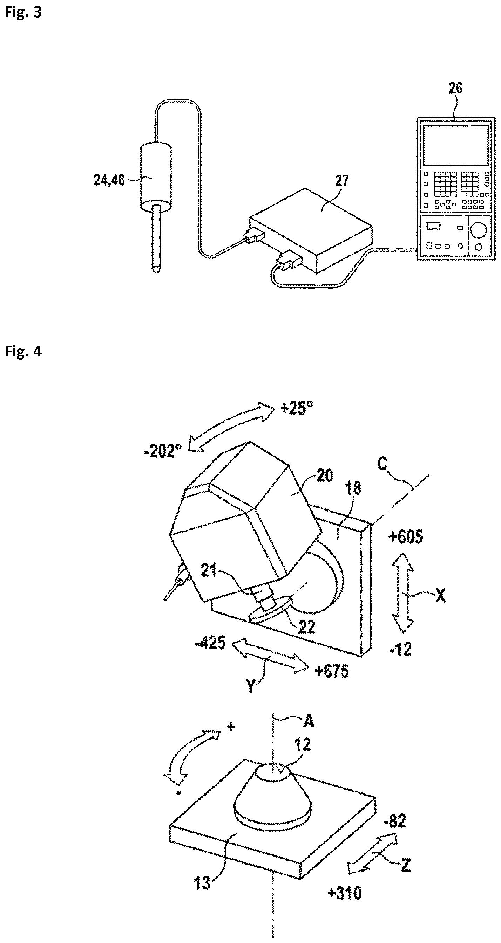

From Figure 4 can be seen that the Z-slide 13 may be moved between translational positions -82 mm and 310 mm of the translational axis Z, the Y-slide 15 may be moved between translational positions -425 mm and 675 mm of the translational axis Y and the X-slide 18 may be moved between translational positions -12 mm and 605 mm of the translational Z axis. The grinding head 21 may be rotated between angular positions -202° and 25° of the rotational axis C while the machining table 12 may be rotated without any angular restriction. Of course, other embodiments according to the invention may show different domains of translational and/or rotational movement.

Furthermore, the machining center 10 preferably comprises a CNC-programmable control unit 26 which is connected to the linear and rotational drives and the sensors of the machining center 10. The control unit 26 may define a plurality of compensating parameters corresponding to geometric deviations $\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$, $\Delta SC_Y$, $\Delta SA_Y$, $\Delta SA_Z$, $\Delta CT_X$ of rotational axes A, C, S and translational axes X, Y, Z of the machining center 10.

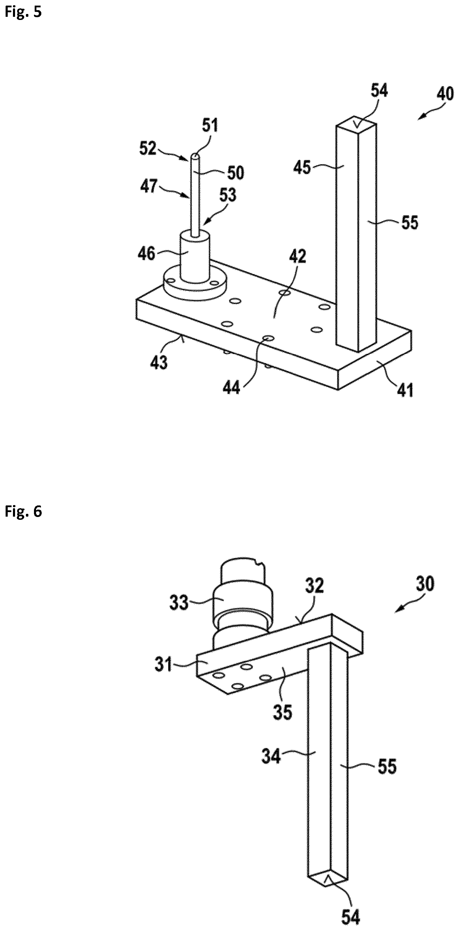

In figure 5 a preferred embodiment of a first test piece 40 according to the invention is shown. The first test piece 40 is configured to be mounted on the machining table 12. The first test piece 40 comprises a first base plate 41 with first and second rectangular main faces 42, 43. The first base plate 41 has fastening means 44 for mounting the first base plate 41 on the machining table 12. The fastening means 44 are formed as six through-holes each corresponding to a female-threaded bore of the machining table 12 and a plurality of pins protruding from the first main face 42 each corresponding to a bore (not shown) of the machining table 12.

The first test piece 40 further comprises a first test mandrel 45 being attached to the base plate 41. The first test piece 40 has a second touch probe 46 which is attached to the first base plate 41. The first test mandrel 45 and the second test probe 46 protrude perpendicular from the second main face 43 of the first base plate 41 and are disposed eccentrical, equally spaced-apart from and opposite to each other with respect to the rotational axis A in the mounted state of the first test piece 40. The second touch probe 46 has a probe tip 47 extending parallel to the first rotational axis A in the mounted state of the first test piece 40 and being configured as a tilting head.

The probe tip 25 of the first touch probe 24 and the probe tip 47 of the second touch probe 46 each comprise an elongate pin 50 and a ball 51. The ball 51 is attached to one free end 52 of the pin 50 and the other free end 53 of the pin is configured to be securely fixed in a mounting of the corresponding touch probe 24, 45.

In figure 6 a preferred embodiment of a second test piece 30 according to the invention is shown. The second test piece 30 is configured to be connectable to the spindle 21 and comprises a second base plate 31 with rectangular main faces 32, 35. The second test piece 30 may further comprise a collet chuck 33 for connecting the second test piece 30 to the spindle 21 of the grinding head 20. The collet chuck 33 may be attached to a first main face 32 of the second base plate 30. The second test piece 30 comprises a second test mandrel 34 being attached to the second base plate 31 and protruding perpendicular from the second main face 35 of the second base plate 31.

The second test mandrel 34 and the first test mandrel 45 are preferably configured identical and made from a case-hardened steel and may be configured as an elongate bar with a quadratic cross-section defining a side touch face 55 and a front touch face 54, respectively.

For carrying out an automatic axis compensation of the machining center 10 according to the invention the machining center may be prepared first. Preparing 100 the machining center 10 may comprise six steps as follows. To start with, compensation CNC programs may be transferred 110 to the control unit 26 and the compensating parameters defined by the control unit are preferably set 120 to zero. In a next step the first test piece 40 may be mounted 130 on the machining table 12, the second touch probe 46 of which is preferably electrically connected to the control unit 26 via the interface unit 27 to provide a second touch probe signal to the control unit 26. Then an orientation and/or position deviation of the first test piece 40 may be determined 140 by a first measurement series. Hereafter the second test piece 30 may be connected 150 to the spindle 21. Following this, an orientation deviation and/or position deviation of the second test piece 30 may be determined 160 by a second measurement series.

Above and below, a measurement series is to be conceived as comprising a plurality of measuring points corresponding to defined states of the kinematic chain which are provided by the control unit 26 by means of adequate movements of the components 12, 13, 15, 18, 20 relative to each other and relative to the rack 11. Each measuring point corresponds to a sampling contact of a probe tip 25, 47 of a touch probe 24, 46 with a touch face 54, 55 of the reciprocal test mandrel 34, 45.

The measured tilting angle detected by the touch probe 24, 46 is transformed by the interface unit 27. Therefore, the interface unit 27 preferably receives sample signals from a touch probe 24, 46, the sample signals corresponding to the tilting angle of the respective probe tip 25, 47. Then the interface unit 27 may calculate output signals according to the requirements of the control unit 26. Therein, the calculated output signals bijectively represent the received input signals. After that the interface unit 27 may transmit the calculated output signals to the control unit 26.

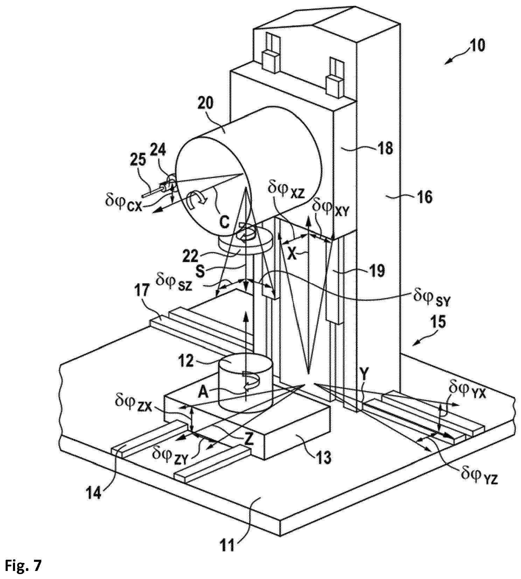

After the preparation 100 of the machining center 10 has been finished nine orientation deviations $\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$ of the rotational axes A, C, S and the translational axes X, Y, Z which are shown in figure 7 may be compensated 200.

To start with, deviations $\delta\varphi_{ZX}$, $\delta\varphi_{YX}$ from orthogonality of the orientation of the first rotational axis A relative to the second translational axis Y and the third translational axis Z may be compensated 210 logically by a third measurement series, respectively.

Above and below, a logical compensation is to be conceived as being carried out automatically by the control unit 26. Thereby, the control unit 26 preferably calculates and sets a compensating parameter corresponding to a deviation determined by a measurement series.

Next a deviation $\delta\varphi_{ZY}$ from parallelism of the second rotational axis C and the third translational axis Z may be compensated 220 logically by a fourth measurement series.

Orientation deviations $\delta\varphi_{SZ}$, $\delta\varphi_{CX}$, $\delta\varphi_{SY}$ of the rotational spindle axis S may be compensated 230 subsequently.

In the first instance, a deviation $\delta\varphi_{SZ}$ from orthogonality of the rotational spindle axis S and the second rotational axis C may be compensated 231 manually according to a fifth measurement series.

As the mechanical adjustment being carried out when compensating 231 the deviation from orthogonality of the rotational spindle axis S and the second rotational axis C changes the orientation of the already compensated second rotational axis C, the previous compensation 220 step has to be repeated.

Thereafter a deviation $\delta\varphi_{CX}$ from orthogonality of the rotational spindle axis S and the third rotational axis Z may be compensated 232 manually according to a sixth measurement series.

Above a manual compensation has to be conceived as being carried out manually by adjusting a corresponding mechanical adjusting means of the machining center according to a measurement series.

Compensation 230 of the rotational spindle axis S may be finished by compensating 233 logically a deviation $\delta\varphi_{SY}$ from parallelism of the rotational spindle axis S and the first rotational axis A by a seventh measurement series.

After the compensation of the rotational spindle axis S has been finished a deviation $\delta\varphi_{YZ}$ from orthogonality of the second translational axis Y and the third translational axis Z may be compensated 240 logically by an eighth measurement series.

Afterwards, a deviation $\delta\varphi_{XY}$ from orthogonality of the first translational axis X and the second translational axis Y may be compensated 250 logically by a ninth measurement series.

To end up with, a deviation $\delta\varphi_{XZ}$ from orthogonality of the first translational axis X and the third translational axis Z may be compensated 260 logically by an tenth measurement series.

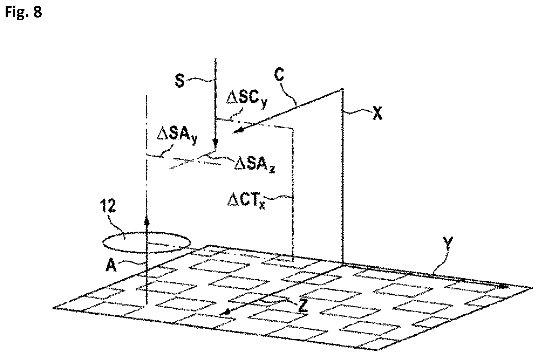

After the compensation 200 of the nine orientation deviations $\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$ of the rotational axes A, C, S and the translational axes X, Y, Z has been finished four position deviations $\Delta SC_Y$, $\Delta SA_Y$, $\Delta SA_Z$, $\Delta CT_X$ of the rotational spindle axis S and the translational axes X, Y, Z, respectively, which are shown in figure 8 may be compensated 300.

First, an offset deviation $\Delta SC_Y$ between the rotational spindle axis S and the second rotational axis C may be compensated 310 logically by an eleventh measurement series.

Then the zero point deviations $\Delta SA_Y$, $\Delta SA_Z$, $\Delta CT_X$ of the translational axes X, Y, Z, are compensated 320.

Deviations $\Delta SA_Y$, $\Delta SA_Z$ of the zero points of the third translational axis Z and the second translational axis Y, respectively, may be compensated 321 logically by a twelfth measurement series.

A deviation $\Delta CT_X$ of the zero point of the first translational axis X may be compensated 322 logically by a thirteenth measurement series.

Thereby, the automatic axis compensation according to the invention is finished. The proposed method may comprise thirteen measurement series both for preparing the machining center 10 and carrying out the thirteen axis compensations. Nine measurement series associated with the compensations 210, 220, 233, 240, 250, 260, 310, 321, 322 may be carried out by the control unit 26 automatically and only two compensations being associated with the compensations 231, 232 may be carried out manually. There is no need to convert the machining center 10 during the automatic axis compensation, i.e. the first and second test pieces 30, 40 may be each mounted and unmounted only once, initially and finally, respectively.

Skilled persons understand that both each single step and the sequence of steps to choose for any automatic axis compensation according to the invention have to be adapted to the specific multi-axis machining center on which the method is to be carried out. Particularly, the sequence of steps to choose must obviously satisfy the following conditions:

First, the orientation deviations of the axes have to be compensated in order to ensure orthogonality and parallelism of the axes as defined by the kinematic chain of the multi-axis machining center. The compensation of position deviation of the axes can only carried out when any orientation deviation is compensated.

Second, in case a certain compensating step affects an orientation and/or position of an axis already compensated, steps corresponding to the orientation and/or position of the affected axis - and possibly any subsequent step - have to be repeated.

A significant benefit of the machining center 10 having two touch probes 24, 46 and two test mandrels 34, 45 to be reciprocally sampled by the touch probes 24, 46 and the corresponding method for an axis compensation of the machining center 10 is obviously in avoiding the elaborate ballbar testing. Accordingly, the axis compensation can be carried out automatically to a great extent. Only the compensating steps related to the mechanical adjustment means require a manual operation. Apart from that, the control unit (26) can manage the axis compensation on its own. As a result, an enormous amount of time can be saved, particularly as the axis compensation has to be repeated several times in order to reach a required precision and/or at a relative high frequency related to operation cycles of the machining center 10. For instance, the axis compensation according to the invention may require up to 8 times less time than known alternative methods.

Apart from that, the automatic axis compensation according to the invention requires two repetitions at maximum while known alternative methods usually require more than two repetitions which further increases the efficiency benefit. Another benefit results from the high precision of the axis compensation according to the invention. The achieved precision can be simply checked by carrying out a known alternative method after finishing the automatic axis compensation according to the invention. Such a check has shown that the known alternative method cannot at all improve the adjustment parameter settings obtained by the axis compensation according to the invention, i.e. with the already compensated machining center 10 there are substantially no orientation or position deviations left. For example, with a machining center being axis compensated by the method according to the invention an approval workpiece, i.e. a drilling bit or a milling bit can be machined within a manufacturing tolerance of $\pm\,0,5\,\mu m$ related to a relevant complex surface.

## List of reference numerals

| | |
|---|---|
| 10 | machining center |
| A | first rotational axis |
| C | second rotational axis |
| S | rotational spindle axis |
| X | first translational axis |
| Y | second translational axis |
| Z | third translational axis |
| 11 | rack |
| 12 | machining table |
| 13 | Z slide |
| 14 | linear bearing |
| 15 | Y slide |
| 16 | frame |
| 17 | linear bearing |
| 18 | X slide |
| 19 | linear bearing |
| 20 | grinding head |
| 21 | spindle |
| 22 | machining tool |
| 23 | radial/axial bearing |
| 24 | first touch probe |
| 25 | probe tip |
| 26 | control unit |
| 27 | interface unit |
| 30 | second test piece |
| 31 | base plate |
| 32 | main face |
| 33 | collet chuck |
| 34 | test mandrel |
| 35 | main face |
| 40 | first test piece |

| 41 | base plate |
|---|---|
| 42 | main face |
| 43 | main face |
| 44 | fastening means |
| 45 | test mandrel |
| 46 | second touch probe |
| 47 | probe tip |
| 50 | pin |
| 51 | ball |
| 52 | free end |
| 53 | free end |
| 54 | front touch face |
| 55 | side touch face |
| 100 | preparing the machining center |
| 110 | transferring compensation programs to the control unit |
| 120 | setting the compensating parameters to zero |
| 130 | mounting the first test piece on the machining table and electrically connecting the second touch probe to the control unit |
| 140 | determining an orientation deviation and/or position deviation of the first test piece by a first measurement series |
| 150 | connecting the second test piece to the spindle |
| 160 | determining an orientation deviation and/or position deviation of the second test piece by a second measurement series |
| 200 | compensating orientation deviations |
| 210 | compensating a deviation from orthogonality of the orientation of the first rotational axis relative to the second translational axis and the third translational axis |
| 220 | compensating a deviation from parallelism of the second rotational axis and the third translational axis |
| 230 | compensating orientation deviations of the rotational spindle axis |
| 231 | compensating a deviation from orthogonality of the rotational spindle axis and the second rotational axis |
| 232 | compensating a deviation from orthogonality of the rotational spindle axis and the second rotational axis |
| 233 | compensating a deviation from parallelism of the rotational spindle axis and the first rotational axis |
| 240 | compensating a deviation from orthogonality of the second translational axis and the third translational axis |
| 250 | compensation a deviation from orthogonality of the first translational axis and the second translational axis |
| 260 | compensating a deviation from orthogonality of the first translational axis and the third translational axis |
| 300 | compensating position deviations |
| 310 | compensating an offset deviation between the rotational spindle axis and the second rotational axis |

| 320 | compensating the zero point deviations of the translational axes |
|---|---|
| 321 | compensating a deviation of the zero points of the third translational axis and the second translational axis, respectively |
| 322 | compensating a deviation of the zero point of the first translational axis |

**Claims**

1. A machining center (10), particularly a five-axis grinding center, comprising:

   - a control unit (26) for automatically operating the machining center (10);
   - a grinding head (20), having a spindle (21) for clamping a machining tool (22) and a first touch probe (24) being attached to the grinding head (20) and electrically connected to the control unit (26) to provide a first touch probe signal to the control unit (26);
   - a machining table (12) for supporting a workpiece; and
   - a first test piece (40) being configured to be mounted on the machining table (12),
   **characterized in that**
   the first test piece (40) has a second touch probe (46) being electrically connectable to the control unit (26) to provide a second touch probe signal to the control unit (26), and **in that** the machining center (10) further comprises a second test piece (30) being configured to be connected to the spindle (21).

2. The machining center according to claim 1, **characterized in that**,

   - the machining center (10) defines a first rotational axis (A) and a second rotational axis (C) extending perpendicular to the first rotational axis (A);
   - the machining table (12) is rotatable about the first rotational axis (A);
   - the grinding head (20) is rotatable about the second rotational axis (C);
   - the spindle (21) defines a rotational spindle axis (S) extending perpendicular to the second rotational axis (C);
   - the first touch probe (24) has a probe tip (25) extending parallel to the second rotational axis (C); and
   - the second touch probe (46) has a probe tip (47) extending parallel to the first rotational axis (A) in the mounted state of the first test piece (40).

3. The machining center according to one of claims 1 or 2, **characterized in that** the probe tip (25) of the first touch probe (24) and/or the probe tip (47) of the second touch probe (46) are configured as a tilting head and comprise an elongate pin (50) and a ball (51) wherein the ball is attached to one free end (52) of the pin (50) and the other free end (53) of the pin (51) is configured to be securely fixed in a mounting of the corresponding touch probe (24, 45).

4. The machining center according to claim 3, **characterized in that** the elongate pin (50) comprises a ceramic material and/or the ball (51) is configured as a ruby sphere, particularly with a diameter in the range from 4 mm to 8 mm, preferably in the range from 5 mm to 7 mm and most preferred of 6 mm.

5. The machining center according to one of the preceding claims, **characterized in that** the first test piece (40) further comprises:

   - a first base plate (41), particularly having first and second rectangular main faces (42, 43), the first base plate (41) having fastening means (44) for mounting the first base plate (41) on the machining table (12); and
   - a first test mandrel (45) being attached to the first base plate (41) wherein the first test mandrel (45) and the second touch probe (46) each protrude perpendicular from the second main face (43) of the first base plate (41) and particularly are disposed equally spaced-apart from and opposite with respect to the rotational axis (A) in the mounted state of the first test piece (40).

6. The machining center according to one of the preceding claims, **characterized in that** the second test piece (30) comprises:

   - a second base plate (31), particularly having rectangular main faces (32, 35);
   - a collet chuck (33) for connecting the second test piece (30) to the spindle (21), the collet chuck (33) being attached to a first main face (32) of the second base plate (30); and
   - a second test mandrel (34) being attached to the second base plate (31) and protruding perpendicular from the second main face (35) of the second base plate (31), particularly being disposed eccentrical with respect to the rotational spindle axis (S) in the mounted state of the second test piece (30).

7. The machining center according to one of claims 5 or 6, **characterized in that** the second test mandrel (34) and/or the first test mandrel (45) comprise a case-hardened steel and are configured as an elongate bar with a rectangular, particularly quadratic cross-section defining a side touch face (55) and a front touch face (54), preferably configured identical.

8. The machining center according to one of the preceding claims, **characterized in that** the first test piece (40) is mounted on the machining table (12) and/or the second test piece (30) is connected to the spindle (21) and/or the second touch probe (46) is electrically connected to the control unit (26).

9. A method for carrying out an axis compensation of a machining center, particularly of a five-axis machining center (10) according to one of the preceding claims, the machining center (10) comprising a control unit (26) defining a plurality of compensating parameters corresponding to geometric deviations ($\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$, $\Delta SC_Y$, $\Delta SA_Y$, $\Delta SA_Z$, $\Delta CT_X$) of rotational axes (A, C, S) and translational axes (X, Y, Z) of the machining center (10), a machining table (21) for supporting a workpiece and a grinding head (20) supporting a spindle (21) for clamping a machining tool (22) and having a first touch probe (24) being attached to the grinding head (20), the method comprising mounting a first test piece (40) having a first test mandrel (45) configured to be sampled by the first touch probe (24) on the machining table (21), the method being **characterized by** connecting to the spindle (21) a second test piece (30) having a second test mandrel (34) configured to be sampled by a second touch probe (46) being comprised by and attached to the first test piece (40).

10. The method according to claim 9, **characterized in that** the machining center (10) is a five-axis machining center having a CNC programmable control unit (26), defining a first translational axis (X), a second translational axis (Y), a third translational axis (Z), a first rotational axis (A), a second rotational axis (C) and a rotational spindle axis (S), wherein each translational axis (X, Y, Z) extends transverse, particularly perpendicular to each other translational axis (X, Y, Z), the first rotational axis (A) and the second rotational axis (C) extend parallel to the first translational axis (X) and the third translational axis (Z), respectively, and the rotational spindle axis (S) extends perpendicular to the second rotational axis (C), and having mechanical adjusting means associated with the second rotational axis (C) and the rotational spindle axis (S), respectively, and **in that** the method comprises the steps:

   - Preparing (100) the machining center (10);
   - Compensating (200) a plurality of orientation deviations, particularly exactly nine orientation

deviations ($\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$) of the rotational axes (A, C, S) and the translational axes (X, Y, Z);

- Compensating (300) a plurality of position deviations, particularly exactly four position deviations ($\Delta SC_Y$, $\Delta SA_Y$, $\Delta SA_Z$, $\Delta CT_X$) of the rotational spindle axis (S) and the translational axes (X, Y, Z), respectively.

11. The method of claim 10, **characterized in that** preparing (100) the machining center (10) comprises the steps:

- Transferring (110) compensation CNC programs to the control unit (26);
- Setting (120) the compensating parameters to zero;
- Mounting (130) the first test piece (40) on the machining table (12) and electrically connecting the second touch probe (46) to the control unit (26);
- Determining (140) an orientation deviation and/or a position deviation of the first test piece (40) by a first measurement series;
- Connecting (150) the second test piece (30) to the spindle (21);
- Determining (160) an orientation deviation and/or a position deviation of the second test piece (30) by a second measurement.

12. The method of one of claims 10 or 11, **characterized in that** compensating (200) exactly nine orientation deviations ($\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$) of the rotational axes (A, C, S) and the translational axes (X, Y, Z) comprises the steps:

- Compensating (210) a deviation ($\delta\varphi_{ZX}$, $\delta\varphi_{YX}$) from orthogonality of the orientation of the first rotational axis (A) relative to the second translational axis (Y) and the third translational axis (Z);
- Compensating (220) a deviation ($\delta\varphi_{ZY}$) from parallelism of the second rotational axis (C) and the third translational axis (Z);
- Compensating (230) orientation deviations ($\delta\varphi_{SZ}$, $\delta\varphi_{CX}$, $\delta\varphi_{SY}$) of the rotational spindle axis (S);
- Compensating (240) a deviation ($\delta\varphi_{YZ}$) from orthogonality of the second translational axis (Y) and the third translational axis (Z);
- Compensation (250) a deviation ($\delta\varphi_{XY}$) from orthogonality of the first translational axis (X) and the second translational axis (Y);
- Compensating (260) a deviation ($\delta\varphi_{XZ}$) from orthogonality of the first translational axis (X) and the third translational axis (Z),
wherein the orientation deviations ($\delta\varphi_{ZX}$, $\delta\varphi_{YX}$, $\delta\varphi_{ZY}$, $\delta\varphi_{YZ}$, $\delta\varphi_{XY}$, $\delta\varphi_{XZ}$) are compensated logi-

cally by the control unit (26), the control unit (26) calculating and setting the corresponding compensating parameters.

13. The method of claim 12, **characterized in that** compensating (230) orientation deviations ($\delta\varphi_{SZ}$, $\delta\varphi_{CX}$, $\delta\varphi_{SY}$) of the rotational spindle axis (21) comprises the steps:

- Compensating (231) a deviation ($\delta\varphi_{SZ}$) from orthogonality of the rotational spindle axis (S) and the second rotational axis (C);
- Compensating (232) a deviation ($\delta\varphi_{CX}$) from orthogonality of the rotational spindle axis (S) and the third translational axis (Z);
- Compensating (233) a deviation ($\delta\varphi_{SY}$) from parallelism of the rotational spindle axis (S) and the first rotational axis (A),
wherein the orientation deviations ($\delta\varphi_{SZ}$, $\delta\varphi_{CX}$) related to orthogonality are compensated mechanically by adjusting the corresponding adjusting means and the orientation deviation ($\delta\varphi_{SY}$) related to parallelism is compensated logically by the control unit (26), the control unit (26) calculating and setting the corresponding compensating parameters.

14. The method of one of claims 10 to 13, **characterized in that** compensating (300) exactly four position deviations ($\Delta SC_Y$, $\Delta SA_Y$, $\Delta SA_Z$, $\Delta CT_X$) of the rotational spindle axis (S) and the translational axes (X, Y, Z), respectively, comprises the steps:

- Compensating (310) an offset deviation ($\Delta SC_Y$) between the rotational spindle axis (S) and the second rotational axis (C);
- Compensating (320) the zero point deviations ($\Delta SA_Y$, $\Delta SA_Z$, $\Delta CT_X$) of the translational axes (X, Y, Z),
wherein the offset deviation ($\Delta SC_Y$) is compensated logically by the control unit (26), the control unit (26) calculating and setting the corresponding compensating parameters.

15. The method of claim 14, **characterized in that** compensating (320) the zero point deviations ($\Delta SA_Y$, $\Delta SA_Z$, $\Delta CT_X$) of the translational axes (X, Y, Z) comprises the steps:

- Compensating (321) deviations ($\Delta SA_Z$, $\Delta SA_Y$) of the zero points of the third translational axis (Z) and the second translational axis (Y), respectively;
- Compensating (322) a deviation ($\Delta CT_X$) of the zero point of the first translational axis (X),
wherein the zero point deviations ($\Delta SA_Y$, $\Delta SA_Z$, $\Delta CT_X$) are compensated logically by the control unit (26), the control unit (26) calculating and setting the corresponding compensating parameters.

16. The method of one of claims 9 to 15, **characterized in that** a measurement series is carried out automatically by means of a corresponding CNC program.

**Patentansprüche**

1. Ein Bearbeitungszentrum (10), insbesondere ein fünfachsiges Schleifzentrum, aufweisend:

   - eine Steuereinheit (26) zum automatischen Betreiben des Bearbeitungszentrums (10);
   - einen Schleifkopf (20) mit einer Spindel (21) zum Einspannen eines Bearbeitungswerkzeugs (22) und einer ersten Berührungssonde (24), die am Schleifkopf (20) angebracht und elektrisch mit der Steuereinheit (26) verbunden ist, um ein erstes Berührungssondensignal an die Steuereinheit (26) bereitzustellen;
   - einen Bearbeitungstisch (12) zum Tragen eines Werkstücks;
   - ein erstes Teststück (40), das konfiguriert ist, um auf dem Bearbeitungstisch (12) montiert zu werden; und
   - ein zweites Teststück (30), das konfiguriert ist, um mit der Spindel (21) verbunden zu werden, **dadurch gekennzeichnet, dass** das erste Teststück (40) eine zweite Berührungssonde (46) aufweist, die elektrisch mit der Steuereinheit (26) verbunden werden kann, um ein zweites Berührungssondensignal an die Steuereinheit (26) bereitzustellen.

2. Das Bearbeitungszentrum (10) nach Anspruch 1, **dadurch gekennzeichnet, dass**

   - das Bearbeitungszentrum (10) eine erste Rotationsachse (A) und eine zweite Rotationsachse (C), die sich senkrecht zur ersten Rotationsachse (A) erstreckt, definiert;
   - der Bearbeitungstisch (12) um die erste Rotationsachse (A) drehbar ist;
   - der Schleifkopf (20) um die zweite Rotationsachse (C) drehbar ist;
   - die Spindel (21) eine Rotationsspindelachse (S) definiert, die sich senkrecht zur zweiten Rotationsachse (C) erstreckt;
   - die erste Berührungssonde (24) eine Sondenspitze (25) hat, die sich parallel zur zweiten Rotationsachse (C) erstreckt; und
   - die zweite Berührungssonde (46) eine Sondenspitze (47) hat, die sich im montierten Zustand des ersten Teststücks (40) parallel zur ersten Rotationsachse (A) erstreckt.

3. Das Bearbeitungszentrum nach einem der Ansprüche 1 oder 2, **dadurch gekennzeichnet, dass** die Sondenspitze (25) der ersten Berührungssonde (24) und/oder die Sondenspitze (47) der zweiten Berührungssonde (46) als ein Kippkopf konfiguriert sind und einen länglichen Stift (50) und eine Kugel (51) aufweisen, wobei die Kugel an einem freien Ende (52) des Stifts (50) angebracht ist und das andere freie Ende (53) des Stifts (51) konfiguriert ist, sicher in einer Halterung der entsprechenden Berührungssonde (24, 45) befestigt zu sein.

4. Das Bearbeitungszentrum nach Anspruch 3, **dadurch gekennzeichnet, dass** der längliche Stift (50) ein Keramikmaterial aufweist und/oder die Kugel (51) als Rubinkugel konfiguriert ist, insbesondere mit einem Durchmesser im Bereich von 4 mm bis 8 mm; vorzugsweise im Bereich von 5 mm bis 7 mm und am meisten bevorzugt von 6 mm.

5. Das Bearbeitungszentrum nach einem der vorhergehenden Ansprüche, **dadurch gekennzeichnet, dass** das erste Teststück (40) ferner aufweist:

   - eine erste Grundplatte (41), insbesondere mit ersten und zweiten rechteckigen Hauptflächen (42, 43), wobei die erste Grundplatte (41) Befestigungsmittel (44) zum Montieren der ersten Grundplatte (41) auf dem Bearbeitungstisch (12) hat; und
   - einen ersten Testdorn (45), der an der ersten Grundplatte (41) angebracht ist, wobei der erste Testdorn (45) und die zweite Berührungssonde (46) jeweils senkrecht von der zweiten Hauptfläche (43) der ersten Grundplatte (41) vorstehen und insbesondere im montierten Zustand des ersten Teststücks (40) in gleichem Abstand zur Rotationsachse (A) und dieser gegenüberliegend angeordnet sind.

6. Das Bearbeitungszentrum nach einem der vorhergehenden Ansprüche, **dadurch gekennzeichnet, dass** das zweite Teststück (30) aufweist:

   - eine zweite Grundplatte (31), insbesondere mit rechteckigen Hauptflächen (32, 35);
   - ein Spannzangenfutter (33) zum Verbinden des zweiten Teststücks (30) mit der Spindel (21), wobei das Spannzangenfutter (33) an einer ersten Hauptfläche (32) der zweiten Grundplatte (30) angebracht ist; und
   - einen zweiten Testdorn (34), der an der zweiten Grundplatte (31) angebracht ist und senkrecht von der zweiten Hauptfläche (35) der zweiten Grundplatte (31) vorsteht, im montierten Zustand des zweiten Teststücks (30) insbesondere exzentrisch in Bezug auf die Rotationsspindelachse (S) angeordnet ist.

**7.** Das Bearbeitungszentrum nach einem der Ansprüche 5 oder 6
**dadurch gekennzeichnet, dass**
der zweite Testdorn (34) und/oder der erste Testdorn (45) einen einsatzgehärteten Stahl aufweisen und als längliche Stange konfiguriert sind mit einem rechteckigen, insbesondere quadratischen Querschnitt, der eine seitliche Berührungsfläche (55) und eine vordere Berührungsfläche (54) definiert, die vorzugsweise identisch konfiguriert sind.

**8.** Das Bearbeitungszentrum nach einem der vorhergehenden Ansprüche
**dadurch gekennzeichnet, dass**
das erste Teststück (40) auf dem Bearbeitungstisch (12) montiert ist und/oder das zweite Teststück (30) mit der Spindel (21) verbunden ist und/oder oder die zweite Berührungssonde (46) elektrisch mit der Steuereinheit (26) verbunden ist.

**9.** Ein Verfahren zum Durchführen einer Achsenkompensation eines Bearbeitungszentrums, insbesondere eines fünfachsigen Bearbeitungszentrums (10) gemäß einem der vorhergehenden Ansprüche, wobei das Bearbeitungszentrum (10) eine Steuereinheit (26), die eine Vielzahl von Kompensationsparametern definiert, die geometrischen Abweichungen ($\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$, $\Delta SC_Y$, $\Delta SA_Y$, $\Delta SA_Z$, $\Delta CT_X$) der Rotationsachsen (A, C, S) und Translationsachsen (X, Y, Z) des Bearbeitungszentrums (10) entsprechen, einen Bearbeitungstisch (21) zum Tragen eines Werkstücks und einen Schleifkopf (20) zum Tragen einer Spindel (21) zum Einspannen eines Bearbeitungswerkzeugs (22) aufweist und eine erste Berührungssonde (24) hat, die an dem Schleifkopf (20) angebracht ist, wobei das Verfahren das Montieren eines ersten Teststücks (40) mit einem ersten Testdorn (45) aufweist, der konfiguriert ist, um von der ersten Berührungssonde (24) auf dem Bearbeitungstisch (21) abgetastet zu werden,
wobei das Verfahren **dadurch gekennzeichnet ist, dass** an die Spindel (21) ein zweites Teststück (30) mit einem zweiten Testdorn (34) verbunden wird, der konfiguriert ist, um von einer zweiten Berührungssonde (46) abgetastet zu werden, die von dem ersten Teststück (40) umfasst und an diesem angebracht ist.

**10.** Das Verfahren nach Anspruch 9,
**dadurch gekennzeichnet, dass**
das Bearbeitungszentrum (10) ein fünfachsiges Bearbeitungszentrum mit einer programmierbaren CNC-Steuereinheit (26) ist, die eine erste Translationsachse (X), eine zweite Translationsachse (Y); eine dritte Translationsachse (Z), eine erste Rotationsachse (A), eine zweite Rotationsachse (C) und eine Rotationsspindelachse (S) definiert, wobei sich jede Translationsachse (X, Y, Z) schräg, insbesondere senkrecht zu jeder anderen Translationsachse (X, Y, Z) erstreckt, die erste Rotationsachse (A) und die zweite Rotationsachse (C) sich parallel zur ersten Translationsachse (X) bzw. zur dritten Translationsachse (Z) erstrecken und die Rotationsspindelachse (S) sich senkrecht zur zweiten Rotationsachse (C) erstreckt, und mechanische Einstellmittel aufweist, die der zweiten Rotationsachse (C) bzw. der Rotationsspindelachse (S) zugeordnet sind, und dass das Verfahren die folgenden Schritte aufweist:

- Vorbereiten (100) des Bearbeitungszentrums (10);
- Kompensieren (200) einer Vielzahl von Ausrichtungsabweichungen, insbesondere genau neun Ausrichtungsabweichungen ($\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$) der Rotationsachsen (A, C, S) und der Translationsachsen (X, Y, Z);
- Kompensieren (300) einer Vielzahl von Positionsabweichungen, insbesondere genau vier Positionsabweichungen ($\Delta SC_Y$, $\Delta SA_Y$, $\Delta SA_Z$, $\Delta CT_X$) der Rotationsspindelachse (S) bzw. der Translationsachsen (X, Y, Z).

**11.** Das Verfahren nach Anspruch 10,
**dadurch gekennzeichnet, dass** das Vorbereiten (100) des Bearbeitungszentrums (10) die folgenden Schritte aufweist:

- Übertragen (110) von Kompensations-CNC-Programmen an die Steuereinheit (26);
- Setzen (120) der Kompensationsparameter auf Null;
- Montieren (130) des ersten Teststücks (40) auf dem Bearbeitungstisch (12) und elektrisches Verbinden der zweiten Berührungssonde (46) mit der Steuereinheit (26);
- Bestimmen (140) einer Ausrichtungsabweichung und/oder einer Positionsabweichung des ersten Teststücks (40) durch eine erste Messreihe;
- Verbinden (150) des zweiten Teststücks (30) mit der Spindel (21);
- Bestimmen (160) einer Ausrichtungsabweichung und/oder einer Positionsabweichung des zweiten Teststücks (30) durch eine zweite Messung.

**12.** Das Verfahren nach einem der Ansprüche 10 oder 11,
**dadurch gekennzeichnet, dass**

das Kompensieren (200) von genau neun Ausrichtungsabweichungen ($\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$) der Rotationsachsen (A, C, S) und der Translationsachsen (X, Y, Z) die folgenden Schritte aufweist:

- Kompensieren (210) einer Abweichung ($\delta\varphi_{ZX}$, $\delta\varphi_{YX}$) von der Orthogonalität der Ausrichtung der ersten Rotationsachse (A) relativ zur zweiten Translationsachse (Y) und zur dritten Translationsachse (Z);
- Kompensieren (220) einer Abweichung ($\delta\varphi_{ZY}$) von der Parallelität der zweiten Rotationsachse (C) und der dritten Translationsachse (Z);
- Kompensieren von (230) von Ausrichtungsabweichungen ($\delta\varphi_{SZ}$, $\delta\varphi_{CX}$, $\delta\varphi_{SY}$) der Rotationsspindelachse (S);
- Kompensieren (240) einer Abweichung ($\delta\varphi_{YZ}$) von der Orthogonalität der zweiten Translationsachse (Y) und der dritten Translationsachse (Z);
- Kompensieren (250) einer Abweichung ($\delta\varphi_{XY}$) von der Orthogonalität der ersten Translationsachse (X) und der zweiten Translationsachse (Y);
- Kompensieren (260) einer Abweichung ($\delta\varphi_{XZ}$) von der Orthogonalität der ersten Translationsachse (X) und der dritten Translationsachse (Z),

wobei die Ausrichtungsabweichungen ($\delta\varphi_{ZX}$, $\delta\varphi_{YX}$, $\delta\varphi_{ZY}$, $\delta\varphi_{YZ}$, $\delta\varphi_{XY}$, $\delta\varphi_{XZ}$) durch die Steuereinheit (26) logisch kompensiert werden, wobei die Steuereinheit (26) die entsprechenden Kompensationsparameter berechnet und einstellt.

13. Das Verfahren nach Anspruch 12,
**dadurch gekennzeichnet, dass**
Kompensieren (230) der Ausrichtungsabweichungen ($\delta\varphi_{SZ}$, $\delta\varphi_{CX}$, $\delta\varphi_{SY}$) der Rotationsspindelachse (21) die folgenden Schritte aufweist:

- Kompensieren (231) einer Abweichung ($\delta\varphi_{SZ}$) von der Orthogonalität der Rotationsspindelachse (S) und der zweiten Rotationsachse (C);
- Kompensieren (232) einer Abweichung ($\delta\varphi_{CX}$) von der Orthogonalität der Rotationsspindelachse (S) und der dritten Translationsachse (Z);
- Kompensieren (233) einer Abweichung ($\delta\varphi_{SY}$) von der Parallelität der Rotationsspindelachse (S) und der ersten Rotationsachse (A),
wobei die Ausrichtungsabweichungen ($\delta\varphi_{SZ}$, $\delta\varphi_{CX}$) in Bezug auf die Orthogonalität mechanisch durch Einstellen der entsprechenden Einstellmittel kompensiert werden und die Ausrichtungsabweichung ($\delta\varphi_{SY}$) in Bezug auf die Parallelität logisch durch die Steuereinheit (26) kompensiert wird, wobei die Steuereinheit (26) die entsprechenden Kompensationsparameter berechnet und einstellt.

14. Verfahren nach einem der Ansprüche 10 bis 13,
**dadurch gekennzeichnet, dass**
Kompensieren (300) von genau vier Positionsabweichungen ($\Delta SC_Y$, $\Delta SA_Y$, $\Delta SA_Z$, $\Delta CT_X$) der Rotationsspindelachse (S) bzw. der Translationsachsen (X, Y, Z) die folgenden Schritte aufweist:

- Kompensieren (310) einer Versatzabweichung ($\Delta SC_Y$) zwischen der Rotationsspindelachse (S) und der zweiten Rotationsachse (C);
- Kompensieren (320) der Nullpunktabweichungen ($\Delta SA_Y$, $\Delta SA_Z$, $\Delta CT_X$) der Translationsachsen (X, Y, Z),
wobei die Versatzabweichung ($\Delta SC_Y$) von der Steuereinheit (26) logisch kompensiert wird, wobei die Steuereinheit (26) die entsprechenden Kompensationsparameter berechnet und einstellt.

15. Verfahren nach Anspruch 14,
**dadurch gekennzeichnet, dass**
Kompensieren (320) der Nullpunktabweichungen ($\Delta SA_Y$, $\Delta SA_Z$, $\Delta CT_X$) der Translationsachsen (X, Y, Z) die folgenden Schritte aufweist:

- Kompensieren (321) von Abweichungen ($\Delta SA_Z$, $\Delta SA_Y$) der Nullpunkte der dritten Translationsachse (Z) bzw. der zweiten Translationsachse (Y);
- Kompensieren (322) einer Abweichung ($\Delta CT_X$) des Nullpunkts der ersten Translationsachse (X),
wobei die Nullpunktabweichungen ($\Delta SA_Y$, $\Delta SA_Z$, $\Delta CT_X$) von der Steuereinheit (26) logisch kompensiert werden, wobei die Steuereinheit (26) die entsprechenden Kompensationsparameter berechnet und einstellt.

16. Verfahren nach einem der Ansprüche 9 bis 15,
**dadurch gekennzeichnet, dass**
eine Messreihe mittels eines entsprechenden CNC-Programms automatisch durchgeführt wird.

## Revendications

1. Centre d'usinage (10), notamment centre de meulage à cinq axes, comprenant :

- une unité de commande (26) pour actionner automatiquement le centre d'usinage (10) ;
- une tête de meulage (20), ayant une broche (21) pour serrer un outil d'usinage (22) et une première sonde tactile (24) qui est attachée à la tête de meulage (20) et connectée électriquement à l'unité de commande (26) pour fournir un premier signal de sonde tactile à l'unité de commande (26) ;

- une table d'usinage (12) pour supporter une pièce à travailler ;
- une première éprouvette (40) qui est configurée pour être montée sur la table d'usinage (12), et
- une seconde éprouvette (30) qui est configurée pour être raccordée à la broche (21), **caractérisé en ce que**

la première éprouvette (40) a une seconde sonde tactile (46) qui peut être connectée électriquement à l'unité de commande (26) pour fournir un second signal de sonde tactile à l'unité de commande (26).

2. Centre d'usinage selon la revendication 1, **caractérisé en ce que**,

- le centre d'usinage (10) définit un premier axe de rotation (A) et un second axe de rotation (C) s'étendant perpendiculairement au premier axe de rotation (A) ;
- la table d'usinage (12) est rotative autour du premier axe de rotation (A) ;
- la tête de meulage (20) est rotative autour du second axe de rotation (C) ;
- la broche (21) définit un axe de broche de rotation (S) s'étendant perpendiculairement au second axe de rotation (C) ;
- la première sonde tactile (24) a une pointe de sonde (25) s'étendant parallèlement au second axe de rotation (C) ; et
- la seconde sonde tactile (46) a une pointe de sonde (47) s'étendant parallèlement au premier axe de rotation (A) dans l'état monté de la première éprouvette (40).

3. Centre d'usinage selon l'une des revendications 1 ou 2, **caractérisé en ce que**

la pointe de sonde (25) de la première sonde tactile (24) et/ou la pointe de sonde (47) de la seconde sonde tactile (46) sont configurées sous forme de tête inclinable et comprennent une goupille allongée (50) et une bille (51), dans lequel la bille est attachée à une extrémité libre (52) de la goupille (50) et l'autre extrémité libre (53) de la goupille (51) est configurée pour être fixée solidement dans un montage de la sonde tactile (24, 45) correspondante.

4. Centre d'usinage selon la revendication 3, **caractérisé en ce que**

la goupille allongée (50) comprend un matériau céramique et/ou la bille (51) est configurée sous forme de sphère rubis, notamment avec un diamètre dans la plage de 4 mm à 8 mm, de préférence dans la plage de 5 mm à 7 mm et de manière préférée entre toutes de 6 mm.

5. Centre d'usinage selon l'une des revendications précédentes, **caractérisé en ce que**
la première éprouvette (40) comprend en outre :

- une première plaque de base (41), ayant notamment des première et seconde faces principales rectangulaires (42, 43), la première plaque de base (41) ayant des moyens d'arrimage (44) pour monter la première plaque de base (41) sur la table d'usinage (12) ; et
- un premier mandrin de précision (45) qui est attaché à la première plaque de base (41) dans lequel le premier mandrin de précision (45) et la seconde sonde tactile (46) font saillie chacun perpendiculairement depuis la seconde face principale (43) de la première plaque de base (41) et sont notamment disposés équidistants l'un de l'autre et opposés par rapport à l'axe de rotation (A) dans l'état monté dans la première éprouvette (40).

6. Centre d'usinage selon l'une des revendications précédentes, **caractérisé en ce que**
la seconde éprouvette (30) comprend :

- une seconde plaque de base (31), ayant notamment des faces principales rectangulaires (32, 35) ;
- un dispositif de serrage à pince (33) pour raccorder la seconde éprouvette (30) à la broche (21), le dispositif de serrage à pince (33) étant attaché à une première face principale (32) de la seconde plaque de base (30) ; et
- un second mandrin de précision (34) qui est attaché à la seconde plaque de base (31) et faisant saillie perpendiculairement depuis la seconde face principale (35) de la seconde plaque de base (31), notamment disposé excentrique par rapport à l'axe de broche de rotation (S) dans l'état monté de la seconde éprouvette (30).

7. Centre d'usinage selon l'une des revendications 5 ou 6, **caractérisé en ce que**
le second mandrin de précision (34) et/ou le premier mandrin de précision (45) comprennent un acier de cémentation et sont configurés sous forme de barre allongée avec une section transversale rectangulaire, notamment quadratique définissant une face tactile de côté (55) et une face tactile avant (54), configurées de préférence identiques.

8. Centre d'usinage selon l'une des revendications précédentes, **caractérisé en ce que**
la première éprouvette (40) est montée sur la table d'usinage (12) et/ou la seconde éprouvette (30) est raccordée à la broche (21) et/ou la seconde sonde tactile (46) est connectée électriquement à l'unité de commande (26).

9. Procédé de réalisation d'une compensation d'axe d'un centre d'usinage, notamment d'un centre d'usinage à cinq axes (10) selon l'une des revendications précédentes, le centre d'usinage (10) comprenant une unité de commande (26) définissant une pluralité de paramètres de compensation correspondant à des écarts géométriques ($\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$, $\Delta SC_Y$, $\Delta SA_Y$, $\Delta SA_Z$, $\Delta CT_X$) d'axes de rotation (A, C, S) et d'axes de translation (X, Y, Z) du centre d'usinage (10), une table d'usinage (21) pour supporter une pièce à travailler et une tête de meulage (20) supportant une broche (21) pour serrer un outil d'usinage (22) et ayant une première sonde tactile (24) qui est attachée à la tête de meulage (20), le procédé comprenant le montage d'une première éprouvette (40) ayant un premier mandrin de précision (45) configuré pour être échantillonné par la première sonde tactile (24) sur la table d'usinage (21), le procédé étant **caractérisé par** le raccordement à la broche (21) d'une seconde éprouvette (30) ayant un second mandrin de précision (34) configurée pour être échantillonnée par une seconde sonde tactile (46) qui est comprise par la première éprouvette (40) et attachée à celle-ci.

10. Procédé selon la revendication 9, **caractérisé en ce que**
le centre d'usinage (10) est un centre d'usinage à cinq axes ayant une unité de commande programmable CNC (26), définissant un premier axe de translation (X), un deuxième axe de translation (Y), un troisième axe de translation (Z), un premier axe de rotation (A), un second axe de rotation (C) et un axe de broche de rotation (S), dans lequel chaque axe de translation (X, Y, Z) s'étend transversalement, notamment perpendiculairement à chaque autre axe de translation (X, Y, Z), le premier axe de rotation (A) et le second axe de rotation (C) s'étendent parallèlement au premier axe de translation (X) et au troisième axe de translation (Z), respectivement, et l'axe de broche de rotation (S) s'étend perpendiculairement au second axe de rotation (C), et ayant un moyen de réglage mécanique associé au second axe de rotation (C) et à l'axe de broche de rotation (S), respectivement, et **en ce que** le procédé comprend les étapes suivantes :

     - la préparation (100) du centre d'usinage (10) ;
     - la compensation (200) d'une pluralité d'écarts d'orientation, notamment exactement neuf écarts d'orientation ($\delta\varphi_{ZX}$, $\delta\varphi_{YX}$, $\delta\varphi_{ZY}$, $\delta\varphi_{SZ}$, $\delta\varphi_{CX}$, $\delta\varphi_{SY}$, $\delta\varphi_{YZ}$, $\delta\varphi_{XY}$, $\delta\varphi_{XZ}$) des axes de rotation (A, C, S) et des axes de translation (X, Y, Z) ;
     - la compensation (300) d'une pluralité d'écarts de position, notamment exactement quatre écarts de position ($\Delta SC_Y$, $\Delta SA_Y$, $\Delta SA_Z$, $\Delta CT_X$) de l'axe de broche de rotation (S) et des axes de translation (X, Y, Z), respectivement.

11. Procédé selon la revendication 10, **caractérisé en ce que** la préparation (100) du centre d'usinage (10) comprend les étapes suivantes :

     - le transfert (110) de programmes CNC de compensation à l'unité de commande (26) ;
     - le paramétrage (120) des paramètres de compensation à zéro ;
     - le montage (130) de la première éprouvette (40) sur la table d'usinage (12) et la connexion électrique de la seconde sonde tactile (46) à l'unité de commande (26) ;
     - la détermination (140) d'un écart d'orientation et/ou d'un écart de position de la première éprouvette (40) par une première série de mesures ;
     - le raccordement (150) de la seconde éprouvette (30) à la broche (21) ;
     - la détermination (160) d'un écart d'orientation et/ou d'un écart de position de la seconde éprouvette (30) par une seconde mesure.

12. Procédé selon l'une des revendications 10 ou 11, **caractérisé en ce que** la compensation (200) d'exactement neuf écarts d'orientation ($\delta\varphi_{ZX}$, $\delta\varphi_{YX}$, $\delta\varphi_{ZY}$, $\delta\varphi_{SZ}$. $\delta\varphi_{CX}$, $\delta\varphi_{SY}$, $\delta\varphi_{YZ}$, $\delta\varphi_{XY}$, $\delta\varphi_{XZ}$) des axes de rotation (A, C, S) et des axes de translation (X, Y, Z) comprend les étapes suivantes :

     - la compensation (210) d'un écart ($\delta\varphi_{ZX}$, $\delta\varphi_{YX}$) par rapport à une orthogonalité de l'orientation du premier axe de rotation (A) par rapport au deuxième axe de translation (Y) et au troisième axe de translation (Z) ;
     - la compensation (220) d'un écart ($\delta\varphi_{ZY}$) par rapport à un parallélisme du second axe de rotation (C) et du troisième axe de rotation (S) ;
     - la compensation (230) d'écarts d'orientation ($\delta\varphi_{SZ}$, $\delta\varphi_{CX}$, $\delta\varphi_{SY}$) de l'axe de broche de rotation (S) ;
     - la compensation (240) d'un écart ($\delta\varphi_{YZ}$) par rapport à une orthogonalité du deuxième axe de translation (Y) et du troisième axe de translation (Z) ;
     - la compensation (250) d'un écart ($\delta\varphi_{XY}$) par rapport à une orthogonalité du premier axe de translation (X) et du deuxième axe de translation (Y) ;
     - la compensation (260) d'un écart ($\delta\varphi_{XZ}$) par rapport à une orthogonalité du premier axe de translation (X) et du troisième axe de translation (Z),

dans lequel les écarts d'orientation ($\delta\varphi_{ZX}$, $\delta\varphi_{YX}$, $\delta\varphi_{ZY}$, $\delta\varphi_{YZ}$, $\delta\varphi_{XY}$, $\delta\varphi_{XZ}$) sont compensés logiquement par l'unité de commande (26), l'unité de commande (26) calculant et paramétrant les paramètres de compensation correspondants.

**13.** Procédé selon la revendication 12, **caractérisé en ce que** la compensation (230) d'écarts d'orientation ($\delta\varphi_{SZ}$, $\delta\varphi_{CX}$, $\delta\varphi_{SY}$) de l'axe de broche de rotation (21) comprend les étapes suivantes :

> - la compensation (231) d'un écart ($\delta\varphi_{SZ}$) par rapport à une orthogonalité de l'axe de broche de rotation (S) et du second axe de rotation (C) ;
> - la compensation (232) d'un écart ($\delta\varphi_{CX}$) par rapport à une orthogonalité de l'axe de broche de rotation (S) et du troisième axe de translation (Z) ;
> - la compensation (233) d'un écart ($\delta\varphi_{SY}$) par rapport à un parallélisme de l'axe de broche de rotation (S) et du premier axe de rotation (A), dans lequel les écarts d'orientation ($\delta\varphi_{SZ}$, $\delta\varphi_{CX}$) liés à une orthogonalité sont compensés mécaniquement en réglant le moyen de réglage correspondant et l'écart d'orientation ($\delta\varphi_{SY}$) lié à un parallélisme est compensé logiquement par l'unité de commande (26), l'unité de commande (26) calculant et paramétrant les paramètres de compensation correspondants.

**14.** Procédé selon l'une des revendications 10 à 13, **caractérisé en ce que** la compensation (300) d'exactement quatre écarts de position ($\Delta SC_Y$, $\Delta SA_Y$, $\Delta SA_Z$, $\Delta CT_X$) de l'axe de broche de rotation (S) et des axes de translation (X, Y, Z), respectivement, comprend les étapes suivantes :

> - la compensation (310) d'un écart de décalage ($\Delta SC_Y$) entre l'axe de broche de rotation (S) et le second axe de rotation (C) ;
> - la compensation (320) des écarts de point zéro ($\Delta SA_Y$, $\Delta SA_Z$, $ACT_X$) des axes de translation (X, Y, Z), dans lequel l'écart de décalage ($\Delta SC_Y$) est compensé logiquement par l'unité de commande (26), l'unité de commande (26) calculant et paramétrant les paramètres de compensation correspondants.

**15.** Procédé selon la revendication 14, **caractérisé en ce que** la compensation (320) des écarts de point zéro ($\Delta SA_Y$, $\Delta SA_Z$, $ACT_X$) des axes de translation (X, Y, Z) comprend les étapes suivantes :

> - la compensation (321) d'écarts ($\Delta SA_Z$, $\Delta SA_Z$) des points zéro du troisième axe de translation (Z) et du deuxième axe de translation (Y), respectivement ;
> - la compensation (322) d'un écart ($\Delta CT_X$) du point zéro du premier axe de translation (X), dans lequel les écarts de point zéro ($\Delta SA_Y$, $\Delta SA_Z$, $\Delta CT_X$) sont compensés logiquement par l'unité de commande (26), l'unité de commande (26) calculant et paramétrant les paramètres de compensation correspondants.

**16.** Procédé selon l'une des revendications 9 à 15, **caractérisé en ce que** une série de mesures est réalisée automatiquement au moyen d'un programme CNC correspondant.

**Fig. 1**

**Fig. 2**

**Fig. 3**

**Fig. 4**

**Fig. 5**

**Fig. 6**

EP 3 473 379 B1

**Fig. 7**

**Fig. 8**

**Fig. 9**

| Preparing (100) the machining center | Transferring (110) | |
| | Setting (120) | |
| | Mounting (130) | |
| | Determining (140) | |
| | Connecting (150) | |
| | Determining (160) | |
| Compensating (200) orientation deviations | Compensating (210) | |
| | Compensating (220) | |
| | Compensating (230) | Compensating (231) |
| | | Compensating (232) |
| | | Compensating (233) |
| | Compensating (240) | |
| | Compensation (250) | |
| | Compensating (260) | |
| Compensating (300) position deviations | Compensating (310) | |
| | Compensating (320) | Compensating (321) |
| | | Compensating (322) |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10343613 A1

**Non-patent literature cited in the description**

- A strategy for identifying static deviations in universal spindle head type multi-axis machining centers. **K.M. MUDITHA DASSANAYAKE et al.** International Journal of machine tools and manufacture. Elsevier, 01 August 2006, vol. 46, 1097-1106